# EUROPEAN PATENT SPECIFICATION

(11) **EP 1 737 158 B1**
(45) Date of publication and mention of the grant of the patent: **03.04.2013**
(21) Application number: 06115592.5
(22) Date of filing: 16.06.2006
(51) Int. Cl.: H04L 12/18, H04L 12/58, H04L 29/06, H04L 29/08

(54) **Content delivery in a telecommunications network**
Lieferung von Inhalten in einem Telekommunikationsnetzwerk
Délivrance de contenu dans un réseau de télécommunication

(30) Priority: 21.06.2005 GB 0512660
(43) Date of publication of application: 27.12.2006
(60) Divisional application: 10182911.7
(73) Proprietor: Vodafone Group PLC, Newbury Berkshire RG14 2FN (GB)
(72) Inventor: Papamiltiadis, Konstantinos, Reading, Berkshire RG30 2DJ (GB); Waters, Patrick, Salisbury, Wiltshire SP5 2HN (GB)
(74) Representative: Harries, Simon George

(56) References cited:
- WO-A-03/015430
- WO-A-2004/045230
- WO-A-2004/056067

## Description

The invention relates to a method of and a system for providing a mobile device with content for consumption and a method of and a system for delivering content to a user. The invention also relates a mobile device that concatenates the content segments to facilitate consumption and a telecommunications network.

Video content can be sent to a mobile device by streaming or broadcasting. One problem with content so sent is that the content may not be received by the mobile device at a time convenient for the user of the mobile device. Also, it may not be convenient for a user to spend a long period of time viewing video content, such as a sports event, on his or her mobile device.

MMSs including video content may be sent from a first mobile device to a second mobile device. The user of the second mobile device may not wish to receive an MMS sent by the first user or may wish to receive MMSs that the first user does not choose to send. The second user may wish to receive MMSs containing content of their choosing and at a time of their choosing. Also, when a mobile device has received more than one MMSs, it is laborious and inconvenient for the user to open and consume each MMS one-by-one.

WO 03/015430 describes an SMS message technique whereby advertisements are added to a senders' SMS, such as by a third party server. The recipient upon opening that SMS is presented with the senders' message together with the advertising data.

WO 2004/056067 describes a technique whereby a portion of a multimedia message is delivered and stored to a user's mobile terminal. Thereafter, when the user wants to view the message a portion of the message stored locally is played back immediately, while at the same time a user agent residing in the mobile terminal obtains the remaining contents using streaming technology.

WO 2004/045230 describes a mechanism for delivering streamable media content to a mobile terminal where the media content takes the form of URLs indicating network locations from where particular media components may be obtained.

According to a first aspect of the present invention, there is provided a method of providing a mobile device with a video delivery service, such that content provided to the mobile device includes at least two video content parts from a source of content parts stored on a server, the mobile device and the server being in association with a telecommunications network, each video content part being individually consumable, including the steps of downloading said at least two video content parts from the server to the mobile device; and, in a scheduler means, configuring said at least two video content parts for concatenated consumption by generating a single message that causes the at least two video content parts to be combined such that the at least two video content parts are configured to be executed on the mobile device in succession to form a single video clip viewable by a user of the mobile device upon the single message being opened.

According to a second aspect of the present invention, there is provided a mobile device configured for operation in a telecommunications network and that is operable to download content comprising at least two individually consumable video content parts and the mobile device characterised by including a scheduler means that generates a single message that combines said at least two video content parts for concatenated consumption such that the at least two video content parts are configured to be executed on the mobile device in succession to form a single video clip viewable by a user of the mobile device upon the single message being opened.

According to a third aspect of the present invention, there is provided a system for providing a mobile device with a video delivery service, such that content provided to the mobile device includes at least two video content parts, the system including a server with a database of video content parts stored thereon, the mobile device and the server configured for use with a telecommunications network, the mobile device being configured to download the at least two video content parts from the server, and the system characterised by comprising combining means that configures said at least two video content parts for concatenated consumption by generating a single message that causes said at least two video content parts to be combined such that the at least two video content parts are configured to be executed on the mobile device in succession to form a single video clip viewable by a user of the mobile device upon the single message being opened.

A method of and a system for providing a mobile device with content in a wireless telecommunications network embodying the invention will now be described, by way of example only, with reference to the accompanying drawings in which:
Figure 1 shows schematically the components of a telecommunications system including a central server and a mobile device in accordance with the embodiment of the invention;
Figure 2 shows schematically the components of the central server of Figure 1 and paths of communication between the components of the central server and other components shown in Figure 1;
Figure 3 is a flow chart showing the operations performed by the components shown in Figure 2;
Figure 4 is a flow chart showing the operations performed by one of the components of the central server - an availability checker - shown in Figure 2; and
Figure 5 is a flow chart showing the operations performed by the mobile device shown in Figures 1 and 2.

One application of the present invention is as part of a service to which a user subscribes to receive video content originating from a content broadcaster on his or her mobile device and whereby the user can consume the video content by opening a single MMS.

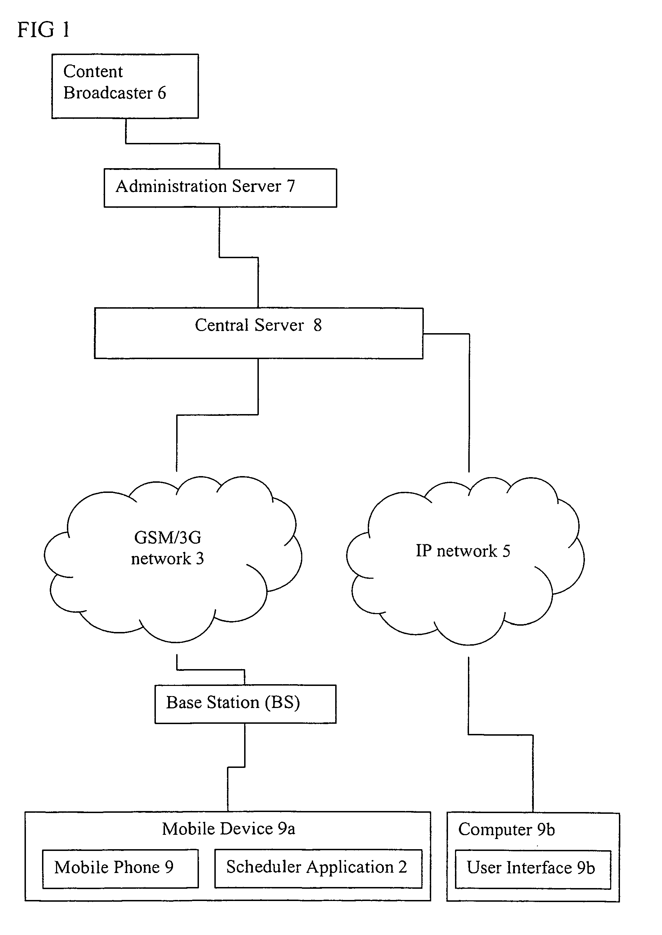

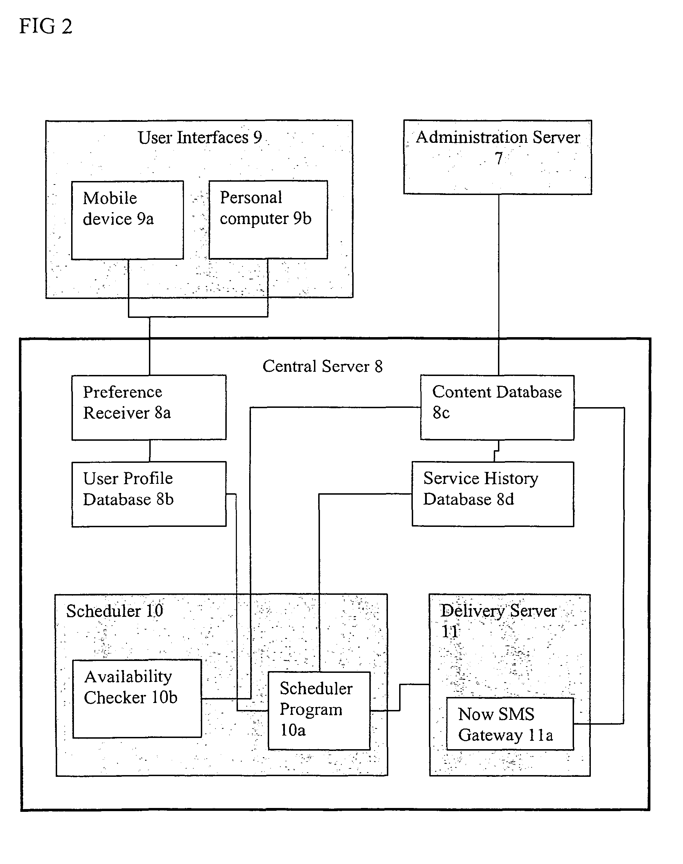

Figure 1 shows the content broadcaster 6, an administration server 7, a central server 8 and a mobile device 9a having a user interface 9. The administration server 7 is in communication with the content broadcaster 6 and the central server 8 (for example, using a fixed or wired link) to enable the content broadcaster 6 to upload video content onto the central server 8 via the administration server 7. The central server 8 stores the video content, makes arrangements as to which video content is to be sent to the mobile device 9a and as to when the content is sent, and sends the video content. The central server 8 is described in greater detail below with reference to Figure 2.

The mobile device 9a, such as a mobile telephone or a PDA, is a device capable of wireless communication in the GSM or 3G telecommunications network 3 in a known way in accordance with the GSM/3G Standards. The central server 8 may be connected to the GSM/3G network by a fixed or wired link.

In this embodiment, video content is to be delivered to the mobile device 9a, although it could be delivered to another mobile device.

The administration server 7 is a Java Server Page Program that allows the content broadcaster 6 to upload video content to the central server 8. The administration server 7 is an interface for the automated uploading of video content from the content broadcaster 6.

The embodiment to be described allows the user of mobile device 9a to selectively obtain this video content from the central server 8. The content server 8 delivers the selected content to the mobile device 9a via the GSM/3G network 3 and the BS 1 in a manner that will be described in more detail below.

In accordance with an important feature of the embodiment, the user of the mobile device 9a makes their preferences of the content that they wish to consume known to the central server 8. The central server 8 is configured to selectively deliver content to the mobile device 9a in accordance with the user's preferences.

The user's preferences may be communicated to the central server 8 by any suitable mechanism. For example, the user may use the mobile device 9a that is to receive the content, by means of the user interface 9 of the mobile device 9a, by transmitting preference information via the BS 1 and GSM/3G network 3. Alternatively, the user may provide this preference information using a computer 9b (for example a PC of fixed location), by means of the user interface 9 of that device. Data may be communicated between the computer 9b and the central server 8 via IP network 5.

The user interface 9 (whether of the mobile device 9a or the computer 9b) allows the user to enter as text information relating to the identity of the video content required to be delivered and the time and/or data of delivery. If the preference information is communicated from the computer 9b, the information collected also includes identity information relating to the unique identity and the type of the mobile device 9a that is to receive the content. If the preference information is collected using the user interface 9 of the mobile device 9a and video content is to be delivered to the mobile device 9a, the identity information will be available from the mobile terminal and can be automatically provided by the GSM/3G network 3 to the central server 8 without requiring this information to be manually input by the user. The user interface of the mobile device 9a is implemented by a J2ME MIDlet and the user interface on the personal computer is implemented by a standard HTML form. Both interfaces wrap the preference information and identity information in an HTTP GET request (the "user request") and submit the user request to the central server 8.

The preference information may also include data indicative of the audio and/or video capabilities of the mobile device 9a - for example the display resolution. The data may simply comprise a unique identifier of the mobile device 9a, transmitted by that device to the network 3. The network 3 is then able to retrieve data relating to the audio and/or video capabilities of the mobile device 9a from its own records and provide this data to the central server 8. However supplied to the server 8, the data enables the content to be tailored to the audio and/or video capabilities of the mobile terminal 9a.

Referring to Figure 2, the central server 8 includes a preference receiver 8a, a user profile database 8b, a content database 8c, a service history database 8d, a scheduler 10 and a delivery server 11. The preference receiver 8a receives user requests from the devices 9a, 9b and also communicates with the user profile database 8b, which stores the user requests. The user profile database 8b structure may be as follows:-

| **Field Name** | **Data Type** | **Description** |
|---|---|---|
| UserID | int | Stores user ID (e.g. 245) |
| UserName | varchar | Stores user name (e.g. John Smith) |
| MobileNumber | bigint | Stores user mobile number (e.g. 07795503191) |
| MobileType | varchar | Stores user mobile type (e.g. SonyEricsson P900) |
| Content1 | varchar | Stores user preferred first content (e.g. Football) |
| Content2 | varchar | Stores user preferred first content (e.g. Tennis) |
| Content3 | varchar | Stores user preferred first content (e.g. handball) |
| Content4 | varchar | Stores user preferred first content (e.g. 800 meters running) |
| Content5 | varchar | Stores user preferred first content (e.g. 1500 meters running) |
| Status | int | Stores '0' for newly added requests. |

The service history database 8d stores user requests that have been complied with (i.e. user requests in accordance with which all requested video content has been sent to the mobile device 9a), and may have the following structure:

| **Field Name** | **Data Type** | **Description** |
|---|---|---|
| UserID | int | Stores user ID (e.g. 245) |
| UserName | varchar | Stores user name (e.g. John Smith) |
| MobileNumber | bigint | Stores user mobile number (e.g. 07795503191) |
| MobileType | varchar | Stores user mobile type (e.g. SonyEricsson P900) |
| Content1 | varchar | Stores user preferred first content (e.g. Football) |
| Content2 | varchar | Stores user preferred first content (e.g. Tennis) |
| Content3 | varchar | Stores user preferred first content (e.g. handball) |
| Content4 | varchar | Stores user preferred first content (e.g. 800 meters running) |
| Content5 | varchar | Stores user preferred first content (e.g. 1500 meters running) |
| Status | int | Stores '1' for every processed request. |

The content database 8c stores the video content obtained from the administration server 7 (and ultimately from the content broadcaster 6 - Figure 1).

Video content is stored in the content database 8c in the form of individually consumable video clips, each of which is tagged with video clip information. The tags may be added by the administration server 7. The tagged video clip information is, for example, a video clip name, a video clip release time and date, a URL from which the video clip can be downloaded and an availability indication (which may be dependent on the release time and date, if such a release time and date is specified in the video clip information). The tag allows identification of a video clip so that the video clip and its associated information can be identified and sent to the mobile device 9a if the video clip is required in accordance with the preference information. The content database 8c may have the following structure:-

| **Field Name** | **Data Type** | **Description** |
|---|---|---|
| Name | varchar | Stores the name of the content type (e.g. Football) |
| URL | varchar | Stores the URL path of the video clip. |
| Content | varchar | Stores the name of the video clip (e.g. Football1.3gp) |
| Release | varchar | Stores the release time/date of a video clip (e.g. 03/10/04 7:11 AM) |
| Availability | int | Store the '0' for unavailable video clips, '1' for available clips. |

The scheduler 10 includes an availability checker 10b and a scheduler program 10a, which are both J2SE programs. The scheduler program 10a communicates with the user profile database 8b, the content database 8c and the service history database 8d. The scheduler program 10a checks whether any uncomplied with user requests are on the user profile database 8b, checks whether all of the video content requested in a user request is available and causes the available video clips to be delivered to the mobile device 9a, as described below in greater detail.

The availability checker 10b communicates with the content database 8c regarding the availability of video clips. The role of the availability checker 10b is to repeatedly perform a check, at predetermined intervals, on the availability of the video clips in the content database 8c. If requested video content is not available, for example due to its release time not having passed or the video content has not yet been uploaded by the administrator, the availability indication has a "0" value. If a new video clip has been released since the previous check, the availability checker 10b dynamically changes the content availability indication from a "0" to a "1".

The delivery server 11 communicates with the content database 8c and the scheduler 10a and includes a Now SMS/MMS Gateway 11a, which can be downloaded from www.nowsms.com. The Now SMS/MMS Gateway 11a includes an SMS Gateway, a MMS Gateway, a WAP Push application and a Multimedia Messaging Service Centre (MMSC). The Now SMS/MMS Gateway 11a has an internal MMS compiler, and requires for operation a GSM modem (not shown) to be connected to the delivery server 11. The delivery server 10 also communicates with the mobile device 9a via the GSM/3G network 3 and BS 1.

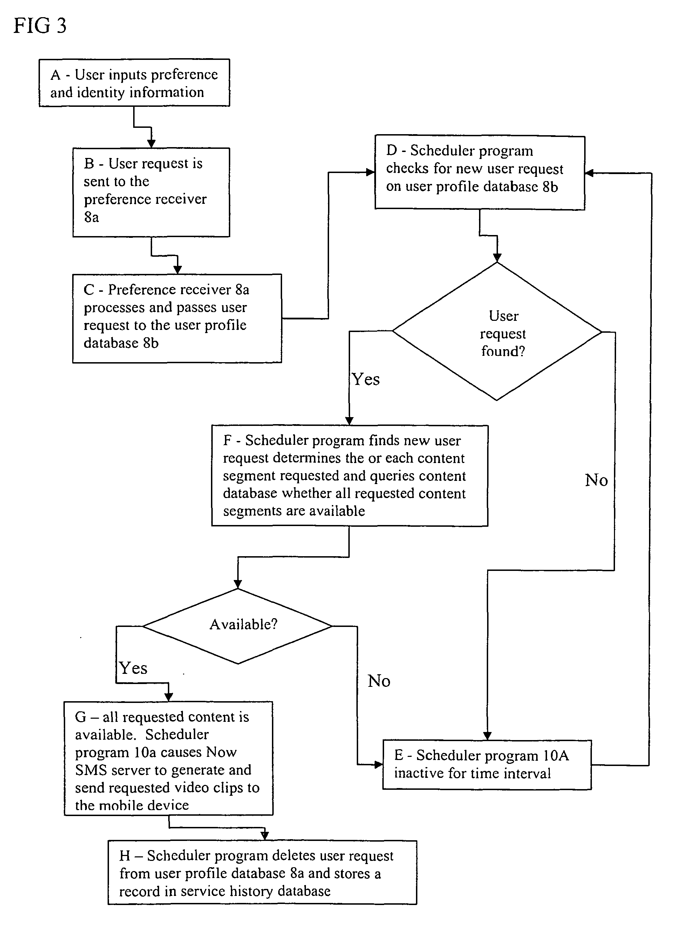

The procedure by which a user obtains content in accordance with their preferences will now be described in more detail with reference to Figure 3. At step A the user inputs preference and identity information into one of the user interfaces 9. The mobile device 9a or computer 9b submits the user request, in which the preference and identity information is wrapped, to the preference receiver 8a, represented at step B. The preference receiver 8a processes and passes (step C) the user request to the user profile database 8b.

At step D, the scheduler program 10a performs a check on the user profile database 8b to determine whether any user requests are present. Such a check is performed regularly at predetermined intervals. If no user request is found, the scheduler program 10a returns temporarily to inactivity (step E). If a user request is found, the scheduler program 10a identifies from the preference information the video clips that will suit the user preferences using the video clip tags. The scheduler program 10a checks on the content database 8c whether the or all of the video clips requested are available (step F) by determining whether the relevant video clip is there and, if so, determining whether its availability indication indicates that the video clip is available.

If the video clips requested are not available, the scheduler program returns temporarily to inactivity (step E). If all of the video clips requested are available, the scheduler program 10a uses the preference information to generate a Synchronised Multimedia Integration Language (SMIL) file and a URL (step G) of the SMIL file.

The SMIL file includes SMIL information derived from the user request such as the layout of each video clip (video clip viewing dimension may be adjusted according to the screen size of the mobile device 9a, which is known from the mobile device type), the URL at which the video clips can be found, the starting point and duration of each video clip using SMIL commands. Execution of the SMIL file causes the video clips to play one after another. An example of such a SMIL file is shown below:-

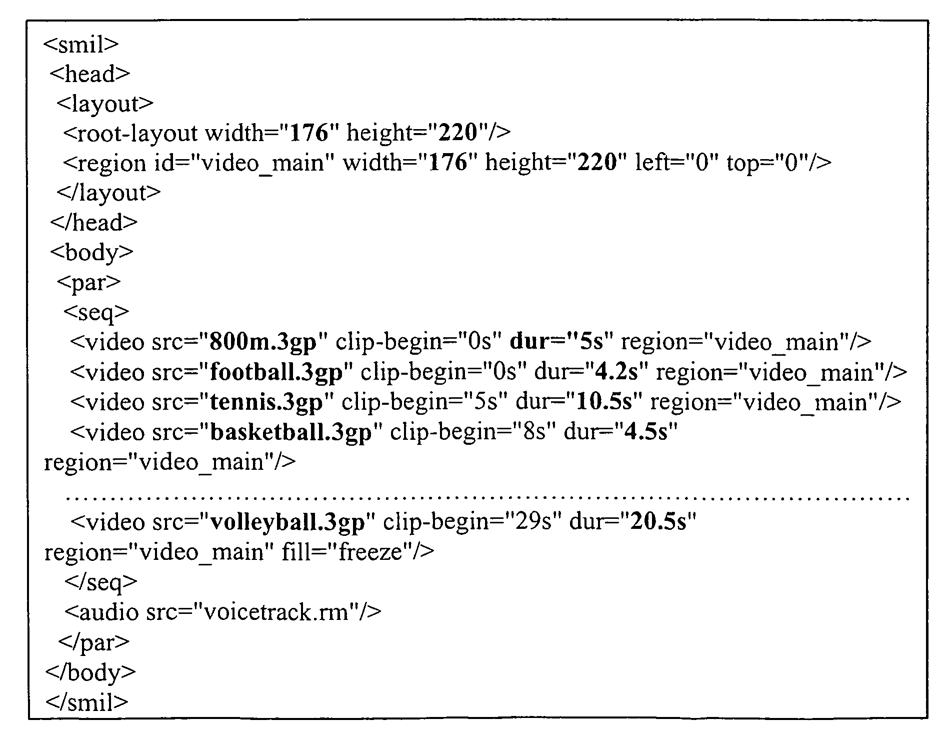

The scheduler program 10a then uses the URL of the SMIL file to generate an HTTP GET request (the "delivery request") for the Now SMS server. This triggers the Now SMS server to generate and send an MMS message. In the known manner, an SMS message is sent to the mobile device 9a to activate a PDP context and initiates the downloading of the content, including the SMIL file and the video clips with which that SMIL file is associated, to the mobile device 9a (step G). The central server 8 (not including the delivery server 11) functions as a Web Server and the content is downloaded directly from there. In other words the SMS sent to the Mobile device 9a contains a URL with a SMIL file that hits back to the Web Server. That way the mobile device 9a sends a HTTP GET request and by-passes the MMSC (which is the component of the network where an MMS is usually uploaded by a user before that is downloaded by another user). In this way, the restriction of MMSs including any fixed length video clips is avoided.

Once a requested video clip has been sent to the mobile device 9a, the user request is complied with and the scheduler program 10a removes the user request from the user profile database 8b and stores a record of the user request and the delivery of the requested video clip or clips in the service history database 8d (step H).

A user who opens the MMS received at the device 9a causes the SMIL file to execute and the video clips play one after the other, without interaction being needed from the user to start one clip after the previous video clip has finished. This is convenient for the user as well as time efficient.

The administration server 7 allows the content broadcaster 6 to upload new video clips and respective associated information about each video clip to the content database 8c at any time. The content broadcaster 6 can define the release time and date of each video clip including allowing one or all video clips to be immediately available (whereupon the availability checker 10b will allocate the newly uploaded content an availability indication of value "1").

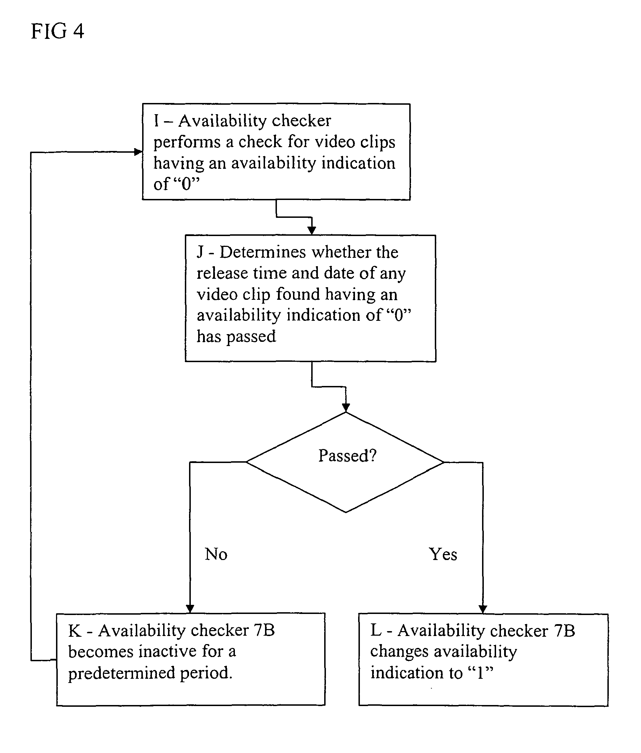

The operation of the availability checker 10b is represented in Figure 4. At step I, the availability checker performs a check for video clips having an availability indication of "0". The availability checker 10b then determines whether the release time and date of these video clips has passed (step J). If the release time and date has not passed, the availability checker returns to inactivity for the predetermined period (step K). If the release time and date has passed, the availability checker changes the availability indication from "0" to "1" (step L). This now allows the scheduler program 10a to make these video clips available to users in accordance with preference information provided by the users.

MMSs that are received by the mobile device 9a may not be viewed immediately by the user - for example, because the user is busy.

The mobile device 9a has installed a J2ME application (not shown) that includes a scheduler application 2 (Figure 1). The scheduler application 2 runs at the end of a period of inactivity of predetermined length and operates to concatenate more than one content file when more than one of such files has been delivered to the mobile device.

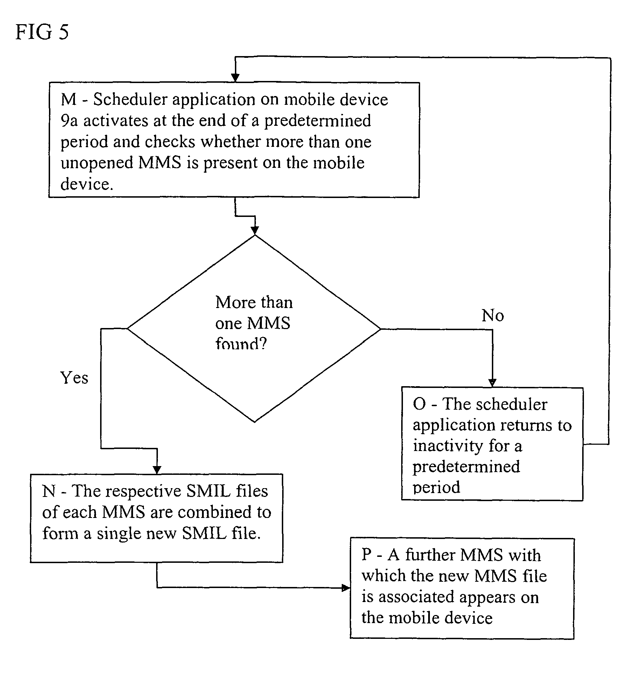

The operation of the scheduler application 2 is represented in Figure 5. The scheduler application performs a check, shown at M, at the end of a predetermined period of inactivity for unopened MMS messages. If more than one such MMS are not found, the scheduler application returns to inactivity (step O) for the predetermined period. If more than one such MMS are found, the scheduler application combines the respective SMIL file of each of the unopened MMSs found into a single new SMIL file (step N). An example of such a SMIL file is shown below:-

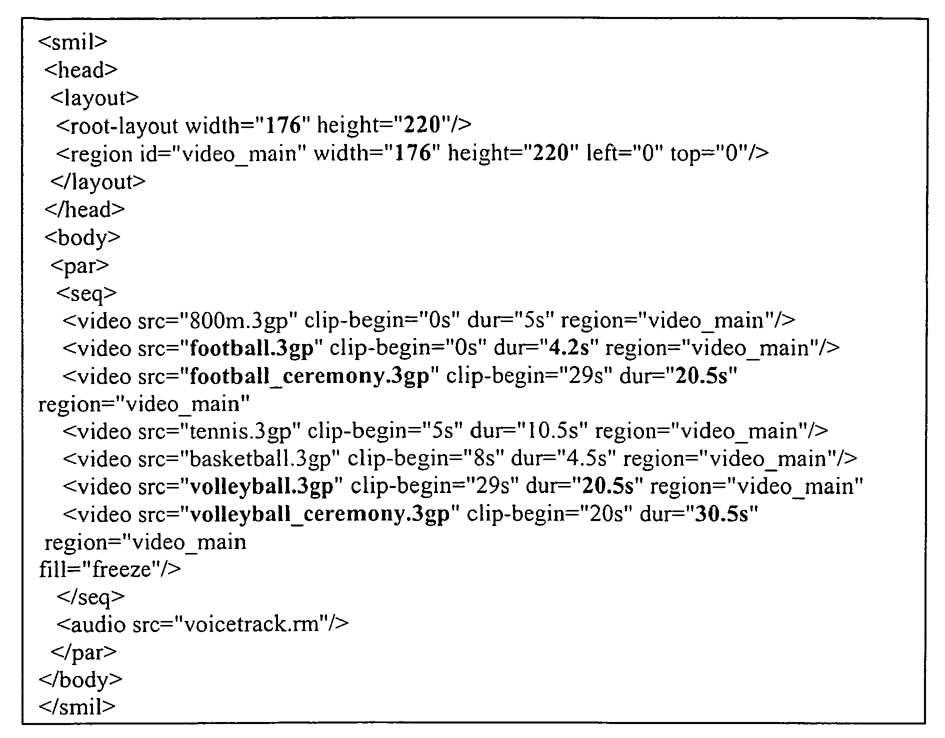

The scheduler application causes a further MMS to appear on the mobile device 9a (step P). Opening the further MMS causes the new SMIL file to execute and all of the video clips play in succession.

The scheduler application has user options. For example, the unopened MMS's can be stopped from appearing on the mobile device 9 following appearance of the further MMS. The video clips by default play in succession such that the first to play has the earliest release date and time, the second the next earliest and so on, but other play order options can be provided.

It is envisaged to implement the above described system with a pay-per-use or a subscription based charging system. Payment information may be supplied at the user interface 9a by the user and can be stored on the server 8 or elsewhere so that, in the case of pay-per-use, each time the user requires the delivery of video clips, the user does not have to resubmit payment information. Payment could depend on the amount of data delivered or be per video clip delivered.

Digital Rights Management (DRM) technology could be utilised to prevent onward sending of video clips by a paying user to a non-paying user. This technology allows encrypted digital files (or content) to be readily distributed to potential users free of charge. The encrypted data may be freely onwardly transmitted by the user receiving the data. However, for any user to be able to make use of the data, a licence must be purchased or otherwise obtained from a rights issuer or a licence broker. The encrypted content may be encrypted on the central server. A DRM agent embodying a trusted entity and having means to decrypt particular content could be sent to the relevant mobile device when a licence for decryption of that content has been obtained.

It is envisaged that a service be offered to the public making use of the above-described system and method. Examples of such a service are given from a user perspective in the following.

### Example 1

Philip is a Manchester United® fan. A prior engagement means that he is unable to view a football match. Accordingly, he registers on the previous day on a computer 9a at his work for highlights in the form of a video clip to be delivered. He inputs the following preference information:
- highlights of all goals scored required;
- highlights of all Manchester United "near misses" required;
- highlights of all "sending-offs" required; and
- The highlights are to be delivered to his mobile phone at a time he specifies that is shortly after the end of his prior engagement.

He also inputs his mobile telephone number and type together with payment information.

Video clips comprising the requested highlights and more are subsequently uploaded by the content broadcaster 6. At the specified time, the scheduler program 10a causes the requested video clips to be extracted from the video clips provided by the content broadcaster, concatenated to form a single video clip (the "Manchester United" clip) and delivered to the mobile telephone 9a. Philip is able to view all of the Manchester United clip by opening a single MMS.

### Example 2

Following from Example 1, Philip also registers to have highlights in the form of video clips delivered of a Formula One event, which takes place shortly after the football match. When registering, he inputs as preference information that he requires all highlights involving Ferrari® cars. These highlights are uploaded, concatenated to form a single video clip ('the Ferrari clip") by the program scheduler and delivered to the mobile telephone 9a.

Philip has not yet has viewed the football highlights video clip. The scheduler mobile application causes the Manchester United clip and the Ferrari clip to be concatenated to form a new single video clip viewable by accessing a single MMS.

It will be apparent that there are various modifications that can be made to the embodiments described above.

It may be inconvenient or tedious for a regular user of the above described system to input their identity and user preferences each time that he or she requires video clips to be sent to his or her mobile device. Accordingly, the server 8 a may be modified to store the user's identity and preference information until the user requests otherwise, whereby the preference information includes a preference to send any available video clip that is in accordance with the other preference information to the mobile device 9a. An example of this modification is given in Example 3.

### Example 3

As a modification of Example 1, Philip now requires a video clip showing highlights in the form of a video clip of each of Manchester United football matches to be delivered to his mobile telephone, the respective highlights of a match being delivered shortly following the end of that match. He therefore inputs this requirement into his preference information, which in his case still includes the preference information in Example 1. A Manchester United clip for each match is delivered accordingly.

The server 8 may analyse the preferences and interests of a user over a period of time and may automatically send that user video clips relating to subjects of interest, without requiring the user to request this content.

The preference information may include that an unread video clip or clips be replaced or partially replaced after a specified length of time by a new video clip or clips.

### Example 4

Philip requires the delivery of highlights of an athletics event. He specifies in the preference information that he is to receive at 7pm all the highlights of a day's running events in the form of a single video clip. He knows he will not view every clip delivered. He therefore specifies in the preference information that a new video clip directed to highlights of a particular event replaces an old video clip, at least in part, in circumstances in accordance with the preference information. For example, a highlight of a semi-final of a running race will be replaced by a highlight of a final, once the video clip of the final is delivered.

The content need not be video clips - it could be audio, image or text content, or a mix therefore. For example, an MMS might provide video content and also a text summary of the video content. Audio files could be played by a user in succession in the same way as video. Images could be viewed as a slideshow and text could scroll on a screen of a mobile device or could also be viewed as a slideshow. The Now SMS Gateway is capable of dealing with video, image, text and audio files and SMIL files can be associated with any such files. Thus, content in the form of multiple content parts can be consumed by the user by opening a single user activity or link, or by performing a single user action, such that the content parts play or are consumed one after another without interaction being needed from the user to start one clip after a previous clip has finished. Consumption of the parts is thus concatenated and continuous.

Content does not have to relate to sporting events mentioned in the Examples - the content could relate to, for example, news highlights or video serialisations. The preference information could include that an instruction for the mobile device 9a to alert the user that content has been delivered - for example by making a sound.

In the embodiment described, the mobile device 9a is the same as the mobile device 9a to which video content is delivered. This does not of course have to be so - content can be requested on one mobile device and delivered to another mobile device. In this case, on requesting content on the one mobile device, the unique identity, and preferably the type, of the other mobile device must be specified.

MMS is not the only possible delivery method (although MMS may work better than other methods outside UK wireless telecommunications networks as MMS technology is standardised between networks). Another such method is by means of Session Initiation Protocol (SIP). This is a session-based protocol designed to establish internet protocol (IP) communication sessions between two or more end points or users. Once a SIP session has been established, communication between these ends points or users can be carried out using a variety of different protocols (for example, those designed for streaming audio and video). These protocols are defined in SIP session initiation messages.

Digital Video Broadcasting (DVB) could also be used to deliver content to the mobile device. The use of DVB in combination with a mobile telecommunications network is discussed in EP1173990 (Roke Manor Research). A deviation from the method described above would be required as with DVB all content would be transmitted with the mobile device being configured to download only the content specified in the preference information. In contrast, as described above in relation to MMS, with MMS or SIP, only content requested by the user would be transmitted specifically to the mobile device.

Another modification is to include a Multicast Broadcast/Multicast Service (MBMS). The MBMS is a unidirectional point to multipoint bearer service in which content is transmitted from a single source, such as the server 6, to multiple mobile devices. Thus a user could include in the identity information that content is to be delivered to multiple mobile devices.

A further modification is to send a notification to the mobile device 9a that content, which the user has previously indicated when signing up to the service might be of interest, is available. The user can then indicate that the content is to be delivered to their mobile device or view the content immediately via a real time video stream.

The Now SMS Gateway is not the only suitable delivery server available - other suitable servers can be obtained.

## Claims

1. A method of providing a mobile device (9a) with a video delivery service, such that content provided to the mobile device (9a) includes at least two video content parts from a source of content parts stored on a server (8), the mobile device (9a) and the server (8) being in association with a telecommunications network, each video content part being individually consumable, including the steps of:
downloading said at least two video content parts from the server (8) to the mobile device (9a); and
in a scheduler means (2; 10a), configuring said at least two video content parts for concatenated consumption by generating a single message that causes the at least two video content parts to be combined such that the at least two video content parts are configured to be executed on the mobile device (9a) in succession to form a single video clip viewable by a user of the mobile device (9a) upon the single message being opened.

2. A method according to claim 1 wherein the server (8) includes the scheduler means (10a), such that said scheduler means (10a) configures the at least two video content parts for concatenated consumption, and the server (8) then sends the single message to the mobile device (9a).

3. A method according to claim 2 wherein the mobile device (9a) includes a second scheduler means (2) and the method further includes:
providing a further at least one video content part to the mobile device (9a); and
said second scheduler means (2) configuring said at least two and said further at least one video content parts for concatenated consumption by generating a new single message.

4. A method according to claim 1 wherein the mobile device (9a) includes the scheduler means (2), such that the server (8) sends the at least two video content parts to the mobile device (9a) and the scheduler means (2) then configures the at least two video content parts for concatenated consumption.

5. A method according to any preceding claim further including incorporating a Synchronised Multimedia Integration Language (SMIL) file in the single message, such that the SMIL file is configured to execute the at least two concatenated video content parts in succession to form a single video clip, upon the single message being opened.

6. A method according to any preceding claim including a prior step of a request being submitted to the server (8) for at least two particular video content parts to be sent to the mobile device (9a).

7. A method according to claim 6 wherein the request is submitted from any one of: the mobile device (9a), a data processing device (9b) and a further mobile device.

8. A method according to claim 6 or 7 wherein each video content part has an availability indication associated therewith to indicate whether the respective video content part is available for sending and a particular video content part is downloaded from the server (8) to the mobile device (9a) only if the availability indication of the video content part indicates that the video content part is available for sending.

9. A method according to claim 6 or 7 wherein each video content part has an availability indication associated therewith to indicate whether the respective video content part is available for sending and the particular video content parts are downloaded from the server (8) to the mobile device (9a) if the availability indication of each of said video content part indicates that the respective video content part is available for sending.

10. A method according to claim 8 or 9 wherein each video content part has a time indication associated therewith, and the server (8) checks the time indication of each video content part having a respective availability that indicates that the video content part is not available for sending and, if the time indication of any of said video content parts has passed, changes the availability indication of those video content parts to indicate that the content is sendable.

11. A method according to claim 10 wherein the server (8) checks whether each particular video content part is available in accordance with the request and causes the particular video content parts to be sent to the mobile device (9a) in accordance with the request.

12. A method according to any one of claims 6 to 11 wherein when the particular video content parts are available for downloading in accordance with the request, the server (8) sends a notification to the mobile device (9a) indicating that the particular video content is available.

13. A method according to claim 12 wherein, following receipt by the mobile device (9a) of the notification, a delivery request is sent by the mobile device (9a) to the server (8) and the server (8) sends the requested video content parts to the mobile device (9a).

14. A method according to claim 12 wherein, following receipt by the mobile device (9a) of the notification, a consume request is sent by the mobile device (9a) to the server (8) and the server (8) streams the video content to the mobile device (9a) for consuming in real time.

15. A method according to any preceding claim including the step of each video content part being supplied to the source (8c) from a content provider (6).

16. A method according to any preceding claim wherein the server (8) delivers the video content parts to a mobile device (9a) using a delivery system (11) from the group of: Multimedia Messaging Service, Session Initiation Protocol, Multicast Broadcast/Multicast Service or Digital Video Broadcasting.

17. A method according to any preceding claim wherein each video content part is encrypted before sending to the mobile device (9a) and the mobile device (9a) decrypts the video content parts to allow consumption.

18. A mobile device (9a) configured for operation in a telecommunications network (3) and that is operable to download content comprising at least two individually consumable video content parts and the mobile device (9a) **characterised by** including:
a scheduler means (2) that generates a single message that combines said at least two video content parts for concatenated consumption such that the at least two video content parts are configured to be executed on the mobile device (9a) in succession to form a single video clip viewable by a user of the mobile device (9a) upon the single message being opened.

19. A mobile device (9a) according to claim 18 wherein said scheduler means (2) is further configured to incorporate an SMIL file in the single message, such that the SMIL file is configured to execute the at least two concatenated video content parts on the mobile device (9a) in succession to form a single video clip viewable by a user of the mobile device (9a), upon the single message being opened.

20. A mobile device (9a) according to claims 18 or 19 wherein the video content received is encrypted and the mobile device (9a) includes decryption means to decrypt the content.

21. A system for providing a mobile device with a video delivery service, such that content provided to the mobile device (9a) includes at least two video content parts, the system including a server (8) with a database (8c) of content parts stored thereon, the mobile device (9a) and the server (8) configured for use with a telecommunications network (3), the mobile device (9a) being configured to download the at least two video content parts from the server (8), and the system **characterised by** comprising:
combining means (10a; 2) that configures said at least two video content parts for concatenated consumption by generating a single message that causes said at least two video content parts to be combined such that the at least two video content parts are configured to be executed on the mobile device (9a) in succession to form a single video clip viewable by a user of the mobile device (9a) upon the single message being opened.

22. A system according to claim 21 wherein the server (8) includes said combining means (10a).

23. A system according to claim 21 wherein the mobile device (9a) includes said combining means (2).

24. A system according to claim 21 wherein said server (8) includes a request database (8d) on which requests to send particular video content parts to the mobile device (9) are stored.

25. A system according to claim 24 wherein each video content part is categorised by tagging to allow identification of the particular video content parts in accordance with the request.

26. A system according to one of claims 21 to 25 wherein each video content part has an availability indication associated therewith indicating whether that content part is available for sending, the server (8) not sending a video content part unless its respective available indication indicates that is available for sending.

27. A system according to claim 26 wherein the server (8) includes an availability checking means (10b) and each video content part has a respective time associated therewith, the availability checking means (10b) checking each video content part that has an availability indication that indicates that that video content part is not available for sending and, if the respective time has passed, dynamically changing the availability indication of that video content part to indicate that that video content is available for sending.

28. A system according to any one of claims 21 to 27 wherein the server (8) includes a scheduler means (10a) that checks whether each of the particular video content parts are available in accordance with each request and, if so, sends the particular video content parts to the mobile device (9a) in accordance with that request.

29. A system according to claim 28 wherein the request requires that the video content parts not be sent to the mobile device (9a) until a time specified in the request.

30. A system according to any one of claims 24 to 29 wherein the request specifies that at least two video content parts having respective availability indications indicating availability at different times should be sent to the mobile device (9a) respectively at the same time and the server (8) sending the at least two video content parts accordingly.

31. A method according to any one of claims 1 to 4 further, including the steps of:
a user of the mobile device (9a) inputting preferences to the server (8);
at least one content provider (6) providing content to the server (8), parts of the content being tagged with an indication of the nature of the content; and
selectively delivering the at least two video content parts from the server (8) to the user's mobile device (9a) via the mobile telecommunications network (3) in dependence upon the tags and the user's preferences.

32. A method according to claim 31, wherein the preferences include an indication of the time the content should be delivered to the user.

33. A system according to claim 21 or 23 further including means (8a) for receiving content preferences from a user of the mobile device (9a), means (8a) for receiving content, means for tagging parts of the content with an indication of the nature of the content, and means for selectively delivering the at least video two content parts to the user's mobile device (9a) via the mobile telecommunications network (3) in dependence upon the tags and the user's preferences.

34. A system according to claim 33 wherein some of the video content parts are configured for concatenated consumption on the server (8) and the rest of the video content parts are configured for concatenated consumption on the mobile device (9a).

35. A system according to claims 33 or 34, wherein the preferences include an indication of the time the content should be delivered to the user.

36. A mobile device according to claim 18 or 19 wherein upon the mobile device receiving a further at least one content part, the scheduler is further configured to configure said at least two and said further at least one content parts into a new single message for concatenated consumption.

## Patentansprüche

1. Verfahren zum Bereitstellen eines Videolieferdienstes für ein Mobilgerät (9a), so dass dem Mobilgerät (9a) bereitgestellter Inhalt wenigstens zwei Videoinhaltsteile von einer auf einem Server (8) gespeicherten Inhaltsteile-Quelle beinhaltet, wobei das Mobilgerät (9a) und der Server (8) mit einem Telekommunikationsnetz assoziiert sind, wobei jeder Videoinhaltsteil individuell konsumiert werden kann, wobei das Verfahren die folgenden Schritte beinhaltet:
Herunterladen der genannten wenigstens zwei Videoinhaltsteile vom Server (8) auf das Mobilgerät (9a); und
Konfigurieren, in einem Scheduler (2; 10a), der genannten wenigstens zwei Videoinhaltsteile zum Verketten des Konsums durch Erzeugen einer einzigen Nachricht, die bewirkt, dass die wenigstens zwei Videoinhaltsteile so kombiniert werden, dass die wenigstens zwei Videoinhaltsteile zur Ausführung auf dem Mobilgerät (9a) in Folge konfiguriert sind, um einen einzigen Videoclip zu bilden, der von einem Benutzer des Mobilgeräts (9a) nach dem Öffnen der einzigen Nachricht betrachtet werden kann.

2. Verfahren nach Anspruch 1, wobei der Server (8) den Scheduler (10a) beinhaltet, so dass der genannte Scheduler (10a) die wenigstens zwei Videoinhaltsteile für einen verketteten Konsum konfiguriert und der Server (8) dann die einzige Nachricht zum Mobilgerät (9a) sendet.

3. Verfahren nach Anspruch 2, wobei das Mobilgerät (9a) einen zweiten Scheduler (2) beinhaltet und das Verfahren ferner Folgendes beinhaltet:
Bereitstellen dem Mobilgerät (9a) von wenigstens einem weiteren Videoinhaltsteil; und
Konfigurieren, durch den genannten zweiten Scheduler (2), der genannten wenigstens zwei Videoinhaltsteile und des genannten wenigstens einen weiteren Videoinhaltsteils zum Verketten des Konsums durch Erzeugen einer neuen einzigen Nachricht.

4. Verfahren nach Anspruch 1, wobei das Mobilgerät (9a) den Scheduler (2) beinhaltet, so dass der Server (8) die wenigstens zwei Videoinhaltsteile zum Mobilgerät (9a) sendet und der Scheduler (2) dann die wenigstens zwei Videoinhaltsteile für einen verketteten Konsum konfiguriert.

5. Verfahren nach einem der vorherigen Ansprüche, das ferner das Integrieren einer SMIL-(Synchronised Multimedia Integration Language)-Datei in die einzige Nachricht beinhaltet, so dass die SMIL-Datei zum Ausführen der wenigstens zwei verketteten Videoinhaltsteile in Folge konfiguriert ist, um nach dem Öffnen der einzigen Nachricht einen einzigen Videoclip zu bilden.

6. Verfahren nach einem der vorherigen Ansprüche mit einem vorherigen Schritt des Vorlegens einer Anforderung dem Server (8) zum Senden von wenigstens zwei bestimmten Videoinhaltsteilen zum Mobilgerät (9a).

7. Verfahren nach Anspruch 6, wobei die Anforderung von einem aus dem Mobilgerät (9a), dem Datenverarbeitungsgerät (9b) und einem weiteren Mobilgerät vorgelegt wird.

8. Verfahren nach Anspruch 6 oder 7, wobei mit jedem Videoinhaltsteil eine Verfügbarkeitsanzeige assoziiert ist, um anzuzeigen, ob der jeweilige Videoinhaltsteil zum Senden zur Verfügung steht und ein bestimmter Videoinhaltsteil vom Server (8) auf das Mobilgerät (9a) nur dann heruntergeladen wird, wenn die Verfügbarkeitsanzeige des Videoinhaltsteils anzeigt, dass der Videoinhaltsteil zum Senden zur Verfügung steht.

9. Verfahren nach Anspruch 6 oder 7, wobei mit jedem Videoinhaltsteil eine Verfügbarkeitsanzeige assoziiert ist, um anzuzeigen, ob der jeweilige Videoinhaltsteil zum Senden zur Verfügung steht, und die bestimmten Videoinhaltsteile vom Server (8) auf das Mobilgerät (9a) heruntergeladen werden, wenn die Verfügbarkeitsanzeige jedes genannten Videoinhaltsteils anzeigt, dass der jeweilige Videoinhaltsteil zum Senden zur Verfügung steht.

10. Verfahren nach Anspruch 8 oder 9, wobei mit jedem Videoinhaltsteil eine Zeitanzeige assoziiert ist und der Server (8) die Zeitanzeige jedes Videoinhaltsteils mit einer jeweiligen Verfügbarkeit prüft, die anzeigt, dass der Videoinhaltsteil nicht zum Senden verfügbar ist, und wenn die Zeitanzeige von einem der genannten Videoinhaltsteile verstrichen ist, die Verfügbarkeitsanzeige dieser Videoinhaltsteile ändert, um anzuzeigen, dass der Inhalt gesendet werden kann.

11. Verfahren nach Anspruch 10, wobei der Server (8) prüft, ob jeder bestimmte Videoinhaltsteil gemäß der Anforderung zur Verfügung steht, und bewirkt, dass die bestimmten Videoinhaltsteile gemäß der Anforderung zum Mobilgerät (9a) gesendet werden.

12. Verfahren nach einem der Ansprüche 6 bis 11, wobei der Server (8), wenn die bestimmten Videoinhaltsteile zum Herunterladen gemäß der Anforderung zur Verfügung stehen, eine Mitteilung zum Mobilgerät (9a) sendet, die anzeigt, dass der bestimmte Videoinhalt zur Verfügung steht.

13. Verfahren nach Anspruch 12, wobei nach dem Empfang der Mitteilung durch das Mobilgerät (9a) eine Lieferanforderung vom Mobilgerät (9a) zum Server (8) gesendet wird und der Server (8) die angeforderten Videoinhaltsteile zum Mobilgerät (9a) sendet.

14. Verfahren nach Anspruch 12, wobei nach dem Empfang der Mitteilung durch das Mobilgerät (9a) eine Konsumanforderung vom Mobilgerät (9a) zum Server (8) gesendet wird und der Server (8) den Videoinhalt zum Mobilgerät (9a) zum Konsumieren in Echtzeit streamt.

15. Verfahren nach einem der vorherigen Ansprüche, das den Schritt beinhaltet, dass jeder Videoinhaltsteil der Quelle (8c) von einem Inhaltsanbieter (6) zugeführt wird.

16. Verfahren nach einem der vorherigen Ansprüche, wobei der Server (8) die Videoinhaltsteile einem Mobilgerät (9a) mit einem Liefersystem (11) aus der folgenden Gruppe liefert: Multimedia Messaging Service, Session Initiation Protocol, Multicast Broadcast/Multicast Service oder Digital Video Broadcasting.

17. Verfahren nach einem der vorherigen Ansprüche, wobei jeder Videoinhaltsteil vor dem Senden zum Mobilgerät (9a) verschlüsselt wird und das Mobilgerät (9a) die Videoinhaltsteile entschlüsselt, um den Konsum zuzulassen.

18. Mobilgerät (9a), das für den Betrieb in einem Telekommunikationsnetz (3) konfiguriert und so ausgelegt ist, dass es Inhalt herunterlädt, der wenigstens zwei individuell konsumierbare Videoinhaltsteile umfasst, wobei das Mobilgerät (9a) **dadurch gekennzeichnet ist, dass** es Folgendes umfasst:
einen Scheduler (2), der eine einzige Nachricht erzeugt, die die genannten wenigstens zwei Videoteile für einen verketteten Konsum kombiniert, so dass die wenigstens zwei Videoinhaltsteile zur Ausführung auf dem Mobilgerät (9a) in Folge konfiguriert sind, um einen einzigen Videoclip zu bilden, der von einem Benutzer des Mobilgeräts (9a) nach dem Öffnen der einzigen Nachricht betrachtet werden kann.

19. Mobilgerät (9a) nach Anspruch 18, wobei der genannte Scheduler (2) ferner zum Integrieren einer SMIL-Datei in die einzige Nachricht konfiguriert ist, so dass die SMIL-Datei zum Ausführen der wenigstens zwei verketteten Videoinhaltsteile auf dem Mobilgerät (9a) in Folge konfiguriert ist, um einen einzigen Videoclip zu bilden, der von einem Benutzer des Mobilgeräts (9a) nach dem Öffnen der einzigen Nachricht betrachtet werden kann.

20. Mobilgerät (9a) nach Anspruch 18 oder 19, wobei der empfangene Videoinhalt verschlüsselt ist und das Mobilgerät (9a) Entschlüsselungsmittel zum Entschlüsseln des Inhalts beinhaltet.

21. System zum Bereitstellen eines Videolieferdienstes für ein Mobilgerät, so dass zum Mobilgerät (9a) gelieferter Inhalt wenigstens zwei Videoinhaltsteile beinhaltet, wobei das System einen Server (8) mit einer Datenbank (8c) mit darauf gespeicherten Inhaltsteilen beinhaltet, wobei das Mobilgerät (9a) und der Server (8) für die Verwendung mit einem Telekommunikationsnetz (3) konfiguriert sind, wobei das Mobilgerät (9a) zum Herunterladen der wenigstens zwei Videoinhaltsteile vom Server (8) konfiguriert ist und das System **dadurch gekennzeichnet ist, dass** es Folgendes umfasst:
Kombinationsmittel (10a; 2), die die genannten wenigstens zwei Videoinhaltsteile für einen verketteten Konsum durch Erzeugen einer einzigen Nachricht konfigurieren, die bewirkt, dass die genannten wenigstens zwei Videoinhaltsteile kombiniert werden, so dass die wenigstens zwei Videoinhaltsteile zur Ausführung auf dem Mobilgerät (9a) in Folge konfiguriert sind, um einen einzigen Videoclip zu bilden, der von einem Benutzer des Mobilgeräts (9a) nach dem Öffnen der einzigen Nachricht betrachtet werden kann.

22. System nach Anspruch 21, wobei der Server (8) die genannten Kombinationsmittel (10a) beinhaltet.

23. System nach Anspruch 21, wobei das Mobilgerät (9a) die genannten Kombinationsmittel (2) beinhaltet.

24. System nach Anspruch 21, wobei der genannte Server (8) eine Anforderungsdatenbank (8d) beinhaltet, auf der Anforderungen zum Senden bestimmter Videoinhaltsteile zum Mobilgerät (9) gespeichert sind.

25. System nach Anspruch 24, wobei jeder Videoinhaltsteil durch Markieren kategorisiert ist, um eine Identifikation der bestimmten Videoinhaltsteile gemäß der Anforderung zuzulassen.

26. System nach einem der Ansprüche 21 bis 25, wobei mit jedem Videoinhaltsteil eine Verfügbarkeitsanzeige assoziiert ist, die anzeigt, ob dieser Videoinhaltsteil zum Senden zur Verfügung steht, wobei der Server (8) einen Videoinhaltsteil nur dann sendet, wenn seine jeweilige Verfügbarkeitsanzeige anzeigt, dass er zum Senden zur Verfügung steht.

27. System nach Anspruch 26, wobei der Server (8) ein Verfügbarkeitsprüfmittel (10b) beinhaltet und mit jedem Videoinhaltsteil eine jeweilige Zeit assoziiert ist, wobei das Verfügbarkeitsprüfmittel (10b) jeden Videoinhaltsteil daraufhin überprüft, ob er eine Verfügbarkeitsanzeige hat, die anzeigt, dass dieser Videoinhaltsteil nicht zum Senden zur Verfügung steht, und wenn die jeweilige Zeit abgelaufen ist, die Verfügbarkeitsanzeige dieses Videoinhaltsteils dynamisch so ändert, dass sie anzeigt, dass dieser Videoinhalt zum Senden zur Verfügung steht.

28. System nach einem der Ansprüche 21 bis 27, wobei der Server (8) einen Scheduler (10a) beinhaltet, der prüft, ob jeder der bestimmten Videoinhaltsteile gemäß jeder Anforderung zur Verfügung steht, und wenn ja, die bestimmten Videoinhaltsteile gemäß dieser Anforderung zum Mobilgerät (9a) sendet.

29. System nach Anspruch 28, wobei die Anforderung verlangt, dass die Videoinhaltsteile erst zu einer in der Anforderung vorgegebenen Zeit zum Mobilgerät (9a) gesendet werden.

30. System nach einem der Ansprüche 24 bis 29, wobei die Anforderung vorgibt, dass wenigstens zwei Videoinhaltsteile mit jeweiligen Verfügbarkeitsanzeigen, die Verfügbarkeit zu unterschiedlichen Zeiten anzeigen, jeweils zur selben Zeit zum Mobilgerät (9a) gesendet werden sollen und der Server (8) demgemäß die wenigstens zwei Videoinhaltsteile sendet.

31. Verfahren nach einem der Ansprüche 1 bis 4, das ferner die folgenden Schritte beinhaltet:
Eingeben, durch einen Benutzer des Mobilgeräts (9a), von Präferenzen in den Server (8);
Bereitstellen, durch wenigstens einen Inhaltsanbieter (6), von Inhalt für den Server (8), wobei Teile des Inhalts mit einer Anzeige der Art des Inhalts markiert sind; und
selektives Liefern der wenigstens zwei Videoinhaltsteile vom Server (8) zum Mobilgerät (9a) des Benutzers über das mobile Telekommunikationsnetz (3) in Abhängigkeit von den Markierungen und den Benutzerpräferenzen.

32. Verfahren nach Anspruch 31, wobei die Präferenzen eine Anzeige der Zeit beinhalten, zu der der Inhalt dem Benutzer geliefert werden soll.

33. System nach Anspruch 21 oder 23, das ferner Mittel (8a) zum Empfangen von Inhaltspräferenzen von einem Benutzer des Mobilgeräts (9a), Mittel (8a) zum Empfangen von Inhalt, Mittel zum Markieren von Teilen des Inhalts mit einer Anzeige der Art des Inhalts und Mittel zum selektiven Liefern der wenigstens zwei Videoinhaltsteile zum Mobilgerät (9a) des Benutzers über das mobile Telekommunikationsnetz (3) in Abhängigkeit von den Markierungen und den Benutzerpräferenzen beinhaltet.

34. System nach Anspruch 33, wobei einige der Videoinhaltsteile für einen verketteten Konsum auf dem Server (8) konfiguriert sind und die übrigen Videoinhaltsteile für einen verketteten Konsum auf dem Mobilgerät (9a) konfiguriert sind.

35. System nach Anspruch 33 oder 34, wobei die Präferenzen eine Anzeige der Zeit beinhalten, zu der der Inhalt dem Benutzer geliefert werden soll.

36. Mobilgerät nach Anspruch 18 oder 19, wobei der Scheduler nach dem Empfang eines weiteren wenigstens einen Inhaltsteils durch das Mobilgerät ferner zum Konfigurieren der genannten wenigstens zwei Inhaltsteile und des genannten weiteren wenigstens einen Inhaltsteils zu einer neuen einzigen Nachricht für einen verketteten Konsum konfiguriert ist.

## Revendications

1. Procédé destiné à pourvoir un dispositif mobile (9a) d'un service de délivrance vidéo, de sorte qu'un contenu délivré au dispositif mobile (9a) comporte au moins deux parties de contenu vidéo à partir d'une source de parties de contenu stockées sur un serveur (8), le dispositif mobile (9a) et le serveur (8) se trouvant en association avec un réseau de télécommunications, chaque partie de contenu vidéo étant consultable individuellement, englobant les étapes consistant à :
télécharger lesdites au moins deux parties de contenu vidéo à partir du serveur (8) vers le dispositif mobile (9a) ; et
configurer, dans des moyens ordonnanceurs (2 ; 10a), lesdites au moins deux parties de contenu vidéo pour une consommation concaténée grâce à la génération d'un message unique qui provoque la combinaison desdites au moins deux parties de contenu vidéo, de sorte que lesdites au moins deux parties de contenu vidéo sont configurées de façon à être exécutées en succession sur le dispositif mobile (9a) afin de constituer un seul clip vidéo visualisable par un utilisateur du dispositif mobile (9a) au moment où le message unique est ouvert.

2. Procédé selon la revendication 1, le serveur (8) comportant les moyens ordonnanceurs (10a), de sorte que lesdits moyens ordonnanceurs (10a) configurent lesdites au moins deux parties de contenu vidéo pour une consommation concaténée, et le serveur (8) envoyant ensuite le message unique au dispositif mobile (9a).

3. Procédé selon la revendication 2, le dispositif mobile (9a) comprenant des seconds moyens ordonnanceurs (2), et le procédé englobant en outre les opérations suivantes :
la délivrance d'au moins une partie supplémentaire de contenu vidéo au dispositif mobile (9a) ; et
la configuration, par lesdits seconds moyens ordonnanceurs (2), desdites au moins deux parties et de ladite au moins une partie supplémentaire de contenu vidéo, pour une consommation concaténée grâce à la génération d'un nouveau message unique.

4. Procédé selon la revendication 1, le dispositif mobile (9a) englobant les moyens ordonnanceurs (2), de sorte que le serveur (8) envoie lesdites au moins deux parties de contenu vidéo au dispositif mobile (9a), et que les moyens ordonnanceurs (2) configurent ensuite lesdites au moins deux parties de contenu vidéo en vue d'une consommation concaténée.

5. Procédé selon l'une quelconque des revendications précédentes, comprenant en outre l'opération consistant à incorporer un fichier SMIL (langage d'intégration et de synchronisation d'éléments multimédias) dans le message unique, de sorte que le fichier SMIL soit configuré de façon à exécuter en succession lesdites au moins deux parties de contenu vidéo concaténées afin de constituer un seul clip vidéo, au moment où le message unique est ouvert.

6. Procédé selon l'une quelconque des revendications précédentes, englobant une étape antérieure relative à la soumission au serveur (8) d'une demande pour qu'au moins deux parties de contenu vidéo spécifiques soient envoyées au dispositif mobile (9a).

7. Procédé selon la revendication 6, la demande étant soumise à partir de l'un quelconque des postes suivants : le dispositif mobile (9a), un dispositif de traitement de données (9b) et un dispositif mobile supplémentaire.

8. Procédé selon la revendication 6 ou 7, chaque partie de contenu vidéo possédant une indication de disponibilité laquelle est associée à celle-ci, afin d'indiquer si la partie de contenu vidéo respective est disponible, ou non, pour être envoyée, et une partie de contenu vidéo spécifique étant téléchargée à partir du serveur (8) vers le dispositif mobile (9a) uniquement si l'indication de disponibilité de la partie de contenu vidéo indique que la partie de contenu vidéo est disponible en vue d'un envoi.

9. Procédé selon la revendication 6 ou 7, chaque partie de contenu vidéo possédant une indication de disponibilité laquelle est associée à celle-ci, afin d'indiquer si la partie de contenu vidéo respective est disponible, ou non, pour être envoyée, et les parties de contenu vidéo spécifiques étant téléchargées à partir du serveur (8) vers le dispositif mobile (9a) l'indication de disponibilité de chacune desdites parties de contenu vidéo indique que la partie de contenu vidéo respective est disponible en vue d'un envoi.

10. Procédé selon la revendication 8 ou 9, chaque partie de contenu vidéo possédant une indication horaire laquelle est associée à celle-ci, et le serveur (8) vérifiant l'indication horaire de chaque partie de contenu vidéo possédant une disponibilité respective qui indique que la partie de contenu vidéo n'est pas disponible pour un envoi et, si l'indication horaire de l'une quelconque des parties de contenu vidéo s'est écoulée, assurant le changement de l'indication de disponibilité des parties de contenu vidéo concernées afin d'indiquer que le contenu est apte à être envoyé.

11. Procédé selon la revendication 10, le serveur (8) vérifiant si chaque partie de contenu vidéo spécifique est disponible, ou non, conformément à la demande et obligeant les parties de contenu vidéo spécifiques à être envoyées au dispositif mobile (9a) conformément à la demande.

12. Procédé selon l'une quelconque des revendications 6 à 11, lorsque les parties de contenu vidéo spécifiques sont disponibles en vue d'un téléchargement, conformément à la demande, le serveur (8) envoyant une notification au dispositif mobile (9a) laquelle indique que le contenu vidéo spécifique est disponible.

13. Procédé selon la revendication 12, à la suite de la réception de la notification par le dispositif mobile (9a), une demande de délivrance étant envoyée par le dispositif mobile (9a) au serveur (8), et le serveur (8) envoyant les parties de contenu vidéo demandées au dispositif mobile (9a).

14. Procédé selon la revendication 12, à la suite de la réception de la notification par le dispositif mobile (9a), une demande de consommation étant envoyée par le dispositif mobile (9a) au serveur (8), et le serveur (8) transmettant en continu le contenu vidéo au dispositif mobile (9a) pour une consommation en temps réel.

15. Procédé selon l'une quelconque des revendications précédentes, comprenant l'étape consistant à assurer la fourniture de chaque partie de contenu vidéo à la source (8c) à partir d'un fournisseur de contenus (6).

16. Procédé selon l'une quelconque des revendications précédentes, le serveur (8) délivrant les parties de contenu vidéo à un dispositif mobile (9a) grâce à un système de délivrance (11) sélectionné parmi le groupe de systèmes suivants : Multimedia Messaging Service, Session Initiation Protocol, Multicast Broadcast/Multicast Service ou Digital Video Broadcasting.

17. Procédé selon l'une quelconque des revendications précédentes, chaque partie de contenu vidéo étant cryptée avant son envoi au dispositif mobile (9a) et le dispositif mobile (9a) décryptant les parties de contenu vidéo pour en permettre la consommation.

18. Dispositif mobile (9a) configuré pour une exploitation dans un réseau de télécommunications (3) et qui est apte à fonctionner de façon à télécharger un contenu comprenant au moins deux parties de contenu vidéo individuellement consultables, et le dispositif mobile (9a) étant **caractérisé par le fait qu'**il comporte :
des moyens ordonnanceurs (2) qui génèrent un message unique lequel combine lesdites au moins deux parties de contenu vidéo pour une consommation concaténée, de telle sorte que lesdites au moins deux parties de contenu vidéo sont configurées de façon à être exécutées en succession sur le dispositif mobile (9a) afin de constituer un seul clip vidéo visualisable par un utilisateur du dispositif mobile (9a) au moment où le message unique est ouvert.

19. Dispositif mobile (9a) selon la revendication 18, lesdits moyens ordonnanceurs (2) étant configurés en outre pour incorporer un fichier SMIL dans le message unique, de sorte que le fichier SMIL soit configuré de façon à exécuter en succession lesdites au moins deux parties de contenu vidéo concaténées sur le dispositif mobile (9a) afin de constituer un seul clip vidéo, visualisable par un utilisateur du dispositif mobile (9a), au moment où le message unique est ouvert.

20. Dispositif mobile (9a) selon les revendications 18 ou 19, le contenu vidéo reçu étant crypté et le dispositif mobile (9a) comportant des moyens de décryptage pour décrypter le contenu.

21. Système permettant de procurer un service de délivrance vidéo à un dispositif mobile, de sorte qu'un contenu délivré au dispositif mobile (9a) comporte au moins deux parties de contenu vidéo, le système englobant un serveur (8) avec une base de données (8c) composée de parties de contenu stockées sur celle-ci, le dispositif mobile (9a) et le serveur (8) étant configurés en vue d'une utilisation avec un réseau de télécommunications (3), le dispositif mobile (9a) étant configuré de façon à télécharger lesdites au moins deux parties de contenu vidéo à partir du serveur (8), et le système étant **caractérisé par le fait qu'**il comporte :
des moyens de combinaison (10a ; 2) qui configurent lesdites au moins deux parties de contenu vidéo pour une consommation concaténée grâce à la génération d'un message unique qui oblige lesdites au moins deux parties de contenu vidéo à être combinées, de sorte que lesdites au moins deux parties de contenu vidéo sont configurées de façon à être exécutées en succession sur le dispositif mobile (9a) afin de constituer un seul clip vidéo visualisable par un utilisateur du dispositif mobile (9a) au moment où le message unique est ouvert.

22. Système selon la revendication 21, le serveur (8) englobant lesdits moyens de combinaison (10a).

23. Système selon la revendication 21, le dispositif mobile (9a) englobant lesdits moyens de combinaison (2).

24. Système selon la revendication 21, ledit serveur (8) englobant une base de données de demandes (8d) sur laquelle sont stockées des demandes pour envoyer des parties de contenu vidéo spécifiques au dispositif mobile (9a).

25. Système selon la revendication 24, chaque partie de contenu vidéo étant catégorisée grâce à des balises afin de permettre une identification des parties de contenu vidéo spécifiques conformément à la demande.

26. Système selon l'une quelconque des revendications 21 à 25, chaque partie de contenu vidéo possédant une indication de disponibilité laquelle est associée à celle-ci, afin d'indiquer si cette partie de contenu est disponible, ou non, pour être envoyée, alors que le serveur (8) n'enverra pas une partie de contenu vidéo à moins que son indication de disponibilité respective n'indique qu'elle est disponible en vue d'un envoi.

27. Système selon la revendication 26, le serveur (8) englobant des moyens de vérification de disponibilité (10b), et chaque partie de contenu vidéo possédant un horaire respectif associé à celle-ci, les moyens de vérification de disponibilité (10b) vérifiant chaque partie de contenu vidéo laquelle possède une indication de disponibilité qui indique que cette partie de contenu vidéo n'est pas disponible en vue d'un envoi et, si l'horaire respectif s'est écoulé, assurant le changement dynamique de l'indication de disponibilité de cette partie de contenu vidéo afin d'indiquer que ce contenu vidéo est disponible en vue d'un envoi.

28. Système selon l'une quelconque des revendications 21 à 27, le serveur (8) englobant des moyens ordonnanceurs (10a) qui vérifient si chacune des parties de contenu vidéo spécifiques sont disponibles, ou non, conformément à chaque demande, et dans l'affirmative, qui envoient les parties de contenu vidéo spécifiques au dispositif mobile (9a), conformément à cette demande.

29. Système selon la revendication 28, la demande exigeant que les parties de contenu vidéo ne soient pas envoyées au dispositif mobile (9a) avant un certain horaire spécifié dans la demande.

30. Système selon l'une quelconque des revendications 24 à 29, la demande spécifiant qu'au moins deux parties de contenu vidéo, possédant des indications de disponibilité respectives lesquelles indiquent la disponibilité à différents horaires, soient envoyées au dispositif mobile (9a) respectivement en même temps, et le serveur (8) envoyant en conséquence lesdites au moins deux parties de contenu vidéo.

31. Procédé selon l'une quelconque des revendications 1 à 4, comportant en outre les étapes suivantes :
un utilisateur du dispositif mobile (9a) effectuant la saisie des préférences vers le serveur (8) ;
au moins un fournisseur de contenus (6) fournissant un contenu au serveur (8), alors que des parties du contenu sont balisées avec une indication donnant la nature du contenu ; et
délivrer de façon sélective lesdites au moins deux parties de contenu vidéo à partir du serveur (8) vers le dispositif mobile (9a) de l'utilisateur par le biais du réseau de télécommunications mobiles (3) en fonction des balises et des préférences de l'utilisateur.

32. Procédé selon la revendication 31, les préférences englobant une indication de l'horaire auquel le contenu devrait être délivré à l'utilisateur.

33. Système selon la revendication 21 ou 23, comprenant en outre des moyens (8a) pour recevoir des préférences de contenu à partir d'un utilisateur du dispositif mobile (9a), des moyens (8a) pour recevoir un contenu, des moyens pour mettre des balises sur des parties du contenu avec une indication donnant la nature du contenu, et des moyens pour délivrer de façon sélective lesdites au moins deux parties de contenu vidéo au dispositif mobile (9a) de l'utilisateur par le biais du réseau de télécommunications mobiles (3) en fonction des balises et des préférences de l'utilisateur.

34. Système selon la revendication 33, certaines des parties de contenu vidéo étant configurées pour une consommation concaténée sur le serveur (8), et le reste des parties de contenu vidéo étant configurées pour une consommation concaténée sur le dispositif mobile (9a).

35. Système selon la revendication 33 ou 34, les préférences englobant une indication de l'horaire auquel le contenu devrait être délivré à l'utilisateur.

36. Dispositif mobile selon la revendication 18 ou 19, lors de la réception par le dispositif mobile d'au moins une partie supplémentaire de contenu, l'ordonnanceur étant configuré en outre de façon à configurer lesdites au moins deux parties et ladite au moins une partie supplémentaire de contenu en un nouveau message unique en vue d'une consommation concaténée.
